# EUROPEAN PATENT APPLICATION

(11) **EP 2 202 134 A1**
(43) Date of publication of application: **30.06.2010**
(21) Application number: 10157717.9
(22) Date of filing: 18.12.2007
(51) Int. Cl.: B62D 25/20

(54) **Floor module including seating**

(30) Priority: 19.12.2006 US 875844 P
(62) Divisional of application: 07869421.3
(71) Applicant: DOW GLOBAL TECHNOLOGIES INC., Midland, MI 48674 (US)
(72) Inventor: Teli, Samar R., Rochester Hills,, MI 48307 (US); James, Allan, Oxford,, MI 48371 (US); Patty, Blair S., Midland,, MI 48640 (US)
(74) Representative: Hull, John Philip

(57) **Abstract**

A fully contented floor module (10) is provided. The floor module includes a lower floor section (18) and a plurality of side walls (20) that define a cavity (28). An upper floor segment (24) is connected to the side walls. A mounting flange (26) extends from the upper floor segment (24) and is adhesively secured to the vehicle load bearing structure (12). The lower floor section (18), side walls (20), upper floor segment (24) and mounting flange (26) are integrally formed. A pivotal floor section (32) is pivotally secured to the upper floor segment (24). A seat (30) may be stowed in the cavity (28). Dampers, heat shields and underbody shields may also be secured to the floor module. The floor module may also include ductwork (44) and wiring raceways (46).

## Description

### CROSS-REFERENCE TO RELATED APPLICATION

The instant application claims priority to U.S. Provisional Application Serial Number 60/875,844 filed 19 December 2006, the entire specification of which is expressly incorporated herein by reference.

### FIELD OF THE INVENTION

The present invention relates to a floor module including seating for motor vehicles.

### DESCRIPTION OF THE RELATED ART

Presently, vehicle floor pans are typically made of metal and are stamped of several pieces. Often, four or more sections are separately stamped and these sections are placed in the vehicle. The floor pan sections span between the vehicle's fire wall and the vehicle's spare wheel well. The vehicle floor pan sections are typically secured to the load bearing structure of a vehicle by welding. The floor pan sections can be placed in vehicles having a load bearing structure of the rail type, or the load bearing structure can be of the unitized body type. In each case, the load bearing structure includes die rails extending the longitudinal length of the vehicle. Cross members extend perpendicular to and between the longitudinal rails to provide further support. The current vehicle floor pan assemblies are susceptible to corrosion, are noisy, and are relatively difficult to assemble and install in a vehicle.

Once the floor pans are installed, seats are typically secured to the upper cross members. Often, seats are able to be stowed above the floor pan. That is, some of the seats in a vehicle are moveable between a stowed position adjacent the floor pan and an upright position for seating.

In addition to the floor pan being assembled in the vehicle, additional items are typically added. For example, duct work for ducting air from the front of the vehicle to the rear is typically added. Similarly, wiring raceways and wiring may be added to provide a manner of providing electrical contact between the front of the vehicle and elements near the rear of the vehicle.

United States Patent No. 6,739,641 is assigned to the assignee of the present invention and comprises and comprises a composite spare wheel well. The patent discloses a vehicle wheel well assembly that is adapted for connection with a vehicle floor pan. The wheel well assembly is formed as a unitary member.

United States Patent Application Publication No. 2005/0127716 is assigned to the assignee of the present invention and shows modular vehicle floor compartments. The modular compartments comprise a series of compartments arranged within a vehicle. The compartments are connected to a support structure of a vehicle.

United States Patent No. 6,375,247 to Volz, et al discloses a body of a motor vehicle with a seat module. The seat module is separately formed and inserted as a prefabricated unit into a load bearing structure of the body in such a way that a floor part in the region of the seat module forms a double floor with the vehicle floor of the body.

United States Patent No. 6,843,336 to Chernoff et al discloses a vehicle belly pan. The vehicle chassis has substantially all of the mechanical, electrical and structural compartments necessary for a fully functioning vehicle.

United States Patent Application Publication No. 2005/0040675 shows a floor module for a vehicle. The floor module comprises a floor plate that is cut to size and ready for installation to a mounting rail.

German Patent No. DE 196 08 127 A1 discloses a method for manufacturing a fiber composite component. The component may comprise a motor vehicle floor.

### SUMMARY OF THE INVENTION

According to the present invention, there is provided a floor module for disposition in a vehicle having a load bearing structure having side rails and at least one lower cross member disposed between the side rails. The floor module comprises a lower floor section. The floor module further comprises at least one side wall extending transversely from said floor section. The lower floor section and the side wall define a cavity therein. The floor module further comprises an upper floor section and a mounting flange extending from the upper floor section. The mounting flange is adapted to engage at least one of the vehicle side rails. The floor module further comprises a seat moveable between a stowed position in said cavity and an upright useable position.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

Figure 1 is an exploded view of one embodiment of the present invention;
Figure 2 is an exploded cross-section view of a view taken along lines 2-2 of Figure 1; and
Figure 3 is a cross-sectional view of a seat module in accordance with one embodiment of the present invention.

### DETAILED DESCRIPTION OF THE PREFERRED EMBODIMENT

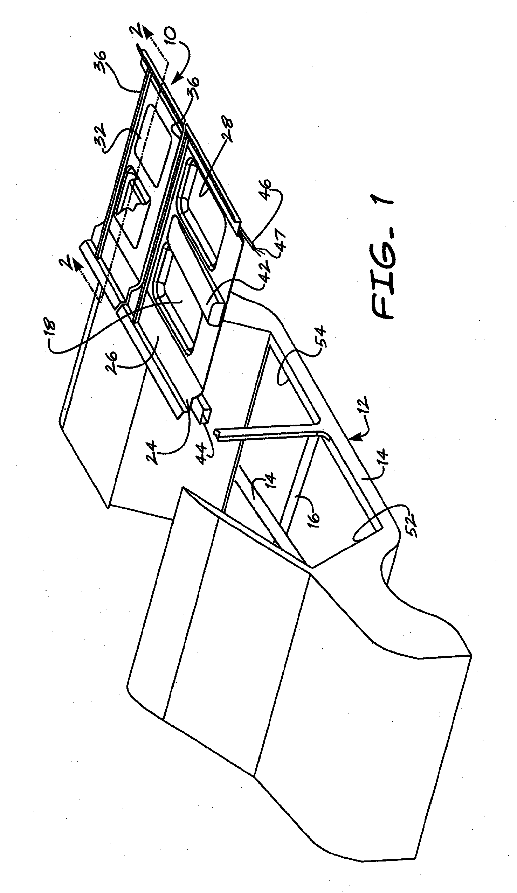

A floor module for disposition in a vehicle is generally shown at 10. The vehicle has a load bearing structure generally indicated at 12. The load bearing structure 12 may be of the rail type or may be of the unitized body type as shown in Figure 1. The load bearing structure 12 has at least a pair of longitudinal rails 14 that extend in the direction of the length of the vehicle. At least one lower cross member 16 extends between the longitudinal rails 14 to provide stability to the load bearing structure 12. Typically, more than one lower cross member 16 is disposed transversely and between longitudinal rails 14 as is well known.

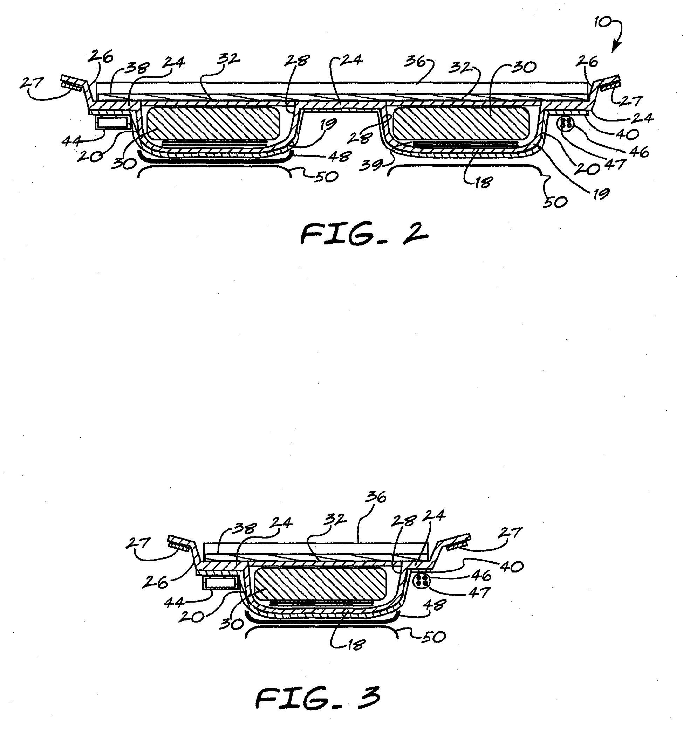

A floor module 10 in accordance with one embodiment of the present invention is shown in Figure 3. The floor module 10 includes a lower floor section 18 having outside edges 19. The lower floor section 18 is configured to provide a floor for the vehicle. The lower floor section 18 can take any contour or shape desired.

The floor module 10 further includes at least one side wall 20 extending transversely from the lower floor section 18. More preferably, four contiguous side walls 20 extend from the outside edges 19 of the lower floor section 18. The side walls 20 and lower floor section 18 define a cavity 28.

The floor module 10 further includes an upper floor segment 24 extending outwardly from each side walls 20. The upper floor segments 24 form a load floor that can receive finishing materials, such as carpeting or the like. More specifically, the upper floor segments 24 connect above the lower floor section 18 to form a portion of the load floor of the vehicle. The upper floor segments 24 are connected preferably by being integrally molded to form the load floor.

The floor module includes 10 at least one mounting flange 26 extending from a least a portion of the upper floor segment 24. Preferably, one mounting flange 26 extends from each side of the upper floor segment 24 adjacent the outer peripheral edge, as shown in Figure 3. The mounting flanges 26 extend outwardly from the upper floor segment 24 on the sides of the modules 10. As shown in Figure 3, the mounting flanges 26 extend upwardly and then outwardly from the upper floor segment 24 so that they can mate with a portion of the longitudinal rail 14 to which they will be connected. It will be appreciated that the mounting flanges 26 can be configured in any shape that allows them to be connected with the associated longitudinal rails 14. The mounting flanges 26 may be connected with the associated longitudinal rails 14 in any manner. However, it is preferred that an adhesive 27 be applied to the mounting flanges 26 which will be used to adhesively secure the mounting flanges 26 and thereby the module to the longitudinal rail 14. Any suitable adhesive may be used to secure the mounting flange 26 with the longitudinal rail 14.

As set forth above, the lower floor section 18 and lower portion 22 of the side walls 20 define a cavity 28. The cavity 28 is for receiving a seat 30 when the seat 30 is in a stowed position. The seat 30 is preferably moveable out of the stowed position to an upright useable position (not shown), in any well-known manner. It will be appreciated that in some applications, a portion of the seat 30 itself may take the place of the pivotal floor section 32 (described below) to provide a portion of the load floor.

The floor module 10 further includes a pivotal floor section 32. More specifically, a pivotal floor section 32 is pivotally connected to the upper floor segment 24. The pivotal floor section 32 is disposed over the cavity 28. The pivotal floor section 32 provides a portion of the load floor for the floor module 10. That is, when the floor module 10 is inserted in the vehicle, and the seats 30 are in the stowed position, the pivotal floor section 32 is contiguous and substantially coplanar with the upper floor segments 24 to comprise a load floor. Accordingly, items may be placed on top of the pivotal floor section 32 and upper floor segment 24. The pivotal floor section 32 may be connected to the upper floor segments 24 in any suitable manner.

The pivotal floor section 32 is pivotal with respect to the upper floor segment 24. More specifically, the pivotal floor section 32 is arranged such that it is disposed over the cavity 28. In this manner, the pivotal floor section 32 can be pivoted to allow access to the cavity 28 to allow the seat 30 to be moved between a stowed position and an upright useable position (not shown) in any well-known manner. The pivotal floor section 32 preferably is connected to the upper floor segment 24 in any suitable manner that allows it to pivot to allow access to the cavity 28, such as, for example, by a living hinge. It will be appreciated, however, that the pivotal floor section 32 may be a separate piece from the upper floor segment 24 and secured thereto by use of suitable hinges or the like. The connection should be in a manner that allows pivoting movement of the pivotal floor section 32 so that access to the cavity 28 can be made.

The floor module 10 further includes one or more upper cross members 36. The upper cross members 36 extend between the mounting flanges 26. The upper cross members 36 preferably comprise the same material as the floor section 18 and mounting flange 26. The upper cross members 36 aid in providing support to the floor module 10. Further, the upper cross members 36 provide an attachment point for attaching items such as seats to the floor module 10.

Each upper cross member 36 is secured to the floor module 10. Preferably, the cross member 26 is secured to the upper floor segment 24. While the upper cross member 36 can be connected to the upper floor segment 24 in any suitable manner, it is preferred that the upper cross member 36 be adhesively secured to the upper floor segment 24. It will be appreciated, however, that mechanical fasteners may also be used to secure the upper cross member 36 to the upper floor segment 24.

The top side of the pivotal floor section 32 is preferably covered with a decorative material. For example, the top side of the pivotal floor section 32 may be covered with carpet 38. Additionally, as set forth above, the top side of the upper floor segment 24 is preferably covered with carpet 38. The carpet 38 can be secured to the pivotal floor section 32 and upper floor segment 24 in any manner. Preferably, the carpet 38 is adhesively secured.

The top surface of the lower floor segment 18 that is inside of cavity 28, may also include a noise damping material 39. The noise damping material 39 can comprise any material that can absorb sound and help dissipate it or block it from passing therethrough. One such example of a damping material is cotton shoddy. However, any suitable damping material or combination of damping materials may be used. The noise damping material 39 can be applied to the lower floor segment 18 in any suitable manner. By way of non-limiting example, the noise damping material can be adhesively secured to the lower floor segment 18. It will also be appreciated that the noise damping material can be applied to the side walls 20 inside the cavity 28 (not shown).

The bottom side of the lower floor section 18 may include a noise or vibration damper 40 thereon. The damper 40 is used to reduce noise and vibration at the lower floor section 18. The damper 40 can also be applied to the side wall 20 and to the upper floor segment 24. The damper 40 may comprise any kind of damper, such as, for example, a damper that can be applied as a liquid by spraying it on or by manual application techniques, such as, for example, by brushing or application by spatula, and cured. Alternatively, the damper 40 can comprise a damping pad that is secured such as by adhesive to the bottom side of the lower floor section 18 that can be used to dampen noise and vibration at the lower floor section 18. By way of non-limiting example, the damper may comprise a water-based damping material, such as BETADAMP^{®} dampers commercially available from The Dow Chemical Company. Also, rubber-based damping materials, such as BETAPHON^{®} dampers which are also commercially available from The Dow Chemical Company may be used. It will be appreciated, however, that any suitable damping material may be used within the context of the present invention.

It is preferred that the lower floor section 18, side walls 20, upper floor segment 24 and mounting flange 26 be made as a single one-piece unit. By way of non-limiting example, the lower floor section 18, side walls 20, upper floor segment 24 and mounting flange 26 can be integrally formed by compression or injection molding. Either a thermoset or thermoplastic may be used. Preferably, the plastic material is reinforced. One suitable thermoset material that may be used is a continuous reinforced epoxy material. An example of one suitable epoxy material that may be used is DER 383 which is commercially available from The Dow Chemical Company. One suitable thermoplastic that may be used is reinforced polypropylene. While it is preferred that continuous fiber reinforcement be used, it will be appreciated that any suitable reinforcement material may be used. Glass fibers, carbon fibers, natural fibers or aramid fibers may be used. Additionally, the fibers may in form of a mat. While some materials are specified that may be used to make the lower floor section 18, side walls 20, upper floor segment 24 and mounting flange 26, it will be understood that the material used to make these components can comprise any material that provides the requisite strength. Further, it is preferred that the pivotal floor section 32 and the upper cross members 36 be made from the same materials as the lower floor section 18, side walls 20, upper floor segment 24 and mounting flange 26.

As shown in Figure 1, the floor module 10 may also include a console 42. The console 42 may be integrally formed with the upper floor segment 24. Alternatively, the console 42 can be secured in any manner, such as, for example, by suitable adhesive to the upper floor segment 24.

The floor module 10 may further include accessory items, such as air ducts 44 or wiring raceways 46 having wires 47. The air ducts 44 can be connected to or molded as part of any of the components. As shown, the air ducts 44 and wiring raceways 46 are shown as connected to the outside of the side walls 20. If not molded as part of any component, the accessory items can be connected in any suitable manner, such as, for example, with the use of adhesives. It will be appreciated that any suitable accessory item can incorporated into the floor module.

Additionally, the floor module 10 may include a heat shield 48 secured below the lower floor section 18. Currently, some vehicles have hot sides to the vehicle. The hot side is that side of the vehicle in proximity to the vehicle's exhaust system. A heat shield 48 may be secured under the lower floor section 18. Most preferably, a heat shield 48 is used only on the hot side of the vehicle to prevent heat transfer between the lower floor section 18 and the item on the vehicle causing the heat, such as, for example, the exhaust system. The heat shield 48 can comprise any suitable material that helps prevent the transfer of heat. Preferably, the heat shield 48 is secured to the lower floor section 18, which, as set forth above, may also include the damper 40 thereon. The heat shield 48 can be secured in any suitable manner, such as, for example, by the use of adhesives or suitable mechanical fasteners.

Further, the floor module may include an underbody shield 50. The underbody shield 50 may be used to protect the floor module 10 from impact, such as, for example, by road debris. The underbody shield 50 can comprise any suitable material and take any configuration as is well known in the art. As with the heat shields 48, the underbody shields 50 may be applied either directly to the damper 40 of the lower floor section 18 or to any intermediate heat shield 48. The underbody shields may be secured such as, for example, by the use of suitable adhesives or mechanical fasteners.

As set forth above, several elements of the floor module 10 such as upper cross member 36, carpet 38, noise damper material 39, or accessory items 44,46 may be adhesively secured. Similarly, the floor module 10, itself, is preferably adhesively secured to the longitudinal rails 14. In each case, any suitable adhesive may be used to make the connection. Since the floor module 10 is intended to be secured to the vehicle in the trim shop, it is preferred that the adhesive, at least on the mounting flange 26, be curable at room temperature. This is because the vehicle typically will not undergo any manufacturing steps at elevated temperature at this point. Suitable adhesives include, by way of non-limiting example, polyurethane based adhesives.

It is intended that the floor module 10 be assembled off-line, that is, not at the assembly plant, and inserted into the vehicle in the vehicle's trim shop. Thus, access to the interior of the vehicle is limited. Because the floor module 10 is to be inserted in the trim shop after significant manufacture of the vehicle has been completed, it is intended that the floor module 10 be inserted into the vehicle through a door opening 52. Further, because the floor modules 10 have significant content, such as, for example, seats 30, carpet 38, dampers 40, air ducts 44, wiring raceways 46, heat shields 48 and underbody shields 50, it is intended that more than one floor module 10 be separately inserted into the vehicle and secured. Figure 3 shows a single floor module 10 that is intended to be located in one opening 54 (Figure 1) in a vehicle load bearing structure 12. It will be appreciated, however, that a floor module 10 can be configured to be placed in more than one opening in the vehicle frame assembly 12. For example, Figure 1 shows two floor modules 10, each intended for insertion into two openings 54 in the vehicle's load bearing structure. Like numbers represent like components among the various embodiments. As seen in Figure 2, the floor module 10 may include two cavities 28, each adapted to receive seats 30 in side-by-side arrangement. The interior side walls 20 of the floor module are connected at the upper floor segments 24. Since only one of the lower floor sections 18 will be on the hot side of the vehicle, only the one lower floor section 18 would include a heat shield 48.

Also, as shown in Figure 1, the front floor modules 10 will not include a seat therein. Rather, a mounting point such as the upper cross member 36 is provided to provide a mounting point for a seat that is intended to remain in an upright position. The lower floor section 18 may be used to provide additional room for the front seat passengers. Alternatively, the floor modules providing the front floor may simply comprise one upper floor section 24. In such a case, no side walls 20 or lower floor section 18 is necessary. Additionally, no pivotal floor section 32 is necessary. An upper cross member 36 is provided to attach a seat.

As shown in Figures 1 and 2, floor modules 10 having side-by-side cavities 28 can be placed one in front of the other and connected such that any air ducts 44, wiring raceways 46, wire 17, heat shields 48 or underbody shield 50 line up and are contiguous when the floor modules 10 are installed on the longitudinal rails 14. Although not shown, the air ducts and wiring raceways can include openings that allow air or wires to pass into the vehicle interior at any desired locations. As shown in Figure 1, the floor modules are placed one in front of the other. It will be appreciated, however, that as an alternative to having one floor module 10 for side-by-side seating, a single floor module 10 may be produced for one side of the vehicle (not shown), i.e., one floor module 10 for the driver side and one floor module 10 for the passenger side. In such an instance, fore and aft cavities 28 are provided. In such an arrangement, multiple floor modules 10 can be arranged side-by-side. Such an arrangement might be particularly useful in that different materials can be used on different sides of the vehicle. For example, modules on the hot side of the vehicle may be made of a different material from the floor modules 10 on the cold side of the vehicle.

By having multiple modules capable of being interconnected on the vehicle load support structure 12, flexibility with the floor modules can be provided. Further, by providing fully contented floor modules, each of which is fully assembled off-line and inserted into the vehicle during the trim operations, significant labor savings can be obtained. Also, the seating arrangement for each vehicle can be quickly tailored to any desired specification. Floor modules having different content can be placed at any location in the vehicle to serve any purpose necessary.

To construct a floor module 10 in accordance with the present invention, the lower floor section 18, side walls 20, upper floor segment 24 and mounting flange 26 are integrally formed as set forth above. The pivotal floor section 32 can be integrally formed at the same time with the lower floor section 18 and side walls 20. Alternatively, the pivotal floor section 32 is pivotally secured to the upper floor segment 24 of the side walls 20 in any suitable manner.

The upper cross member 36 is secured to the upper floor segment 24 in any suitable manner, such as with the use of adhesives. A noise damping material 39 may be applied in the cavity 28. Seats 30 are then connected to the floor module 10 and stowed in cavity 28. A damper 40 can be applied to the bottom side of the lower floor section 18. Heat shields 48 and underbody shields 50 may then be secured to the bottom side of the lower floor section 18. Carpet can be secured to the upper floor segment 24 and the pivotal floor segment 32. Once the fully constructed floor module 10 is assembled off-line, that is, not at the assembly plant, it is inserted as a single unit into the vehicle. An adhesive is applied to the mounting flange 26. The mounting flange 26 is then adhesively secured to longitudinal rails 14 to secure the module 10 with the vehicle.

The invention has been described in an illustrative manner. It is to be understood that the terminology used is intended to be in the nature of words of description. Obviously many modifications and variations are possible in light of the above teachings.

## Claims

1. A floor module for disposition in a vehicle having a load bearing structure having side rails and at least one lower cross member disposed between the side rails, said floor module comprising:
a lower floor section,
at least one side wall extending transversely from said floor section, said lower floor section and said side wall defining a cavity therein;
an upper floor section;
a mounting flange extending from said upper floor section and adapted to engage at least one of the vehicle side rails; and
a seat moveable between a stowed position in said cavity and an upright useable position.

2. A floor module as set forth in claim 1 further comprising a pivotal floor section pivotally secured to said upper floor section and operative to cover said cavity.

3. A floor module as set forth in claim 2 wherein said pivotal floor section and said upper floor section comprise a load floor in the vehicle when said seat is in the stowed position.

4. A floor module as set forth in claim 1 further comprising a damper disposed on said lower floor section.

5. A floor module as set forth in claim 1 further comprising a heat shield secured to said lower floor section.

6. A floor module as set forth in claim 1 further comprising an impact shield secured to said lower floor section.

7. A floor module as set forth in claim 1 further comprising an accessory connected to at least one of said side wall, said upper floor section or said mounting flange.

8. A floor module as set forth in claim 7 wherein said accessory comprises an air duct.

9. A floor module as set forth in claim 7 wherein said accessory comprises a wiring raceway.

10. A floor module as set forth in claim 1 further comprising an upper cross member secured to said upper floor section.

11. A floor module as set forth in claim 10 wherein said upper cross member is adhesively secured to said upper floor section.

12. A floor module as set forth in claim 1 further comprising a console secured to and extending from said upper floor section.

13. A floor module as set forth in claim 3 wherein said upper floor section and said pivotal floor section have a decorative covering thereon;

14. A floor module as set forth in claim 1 wherein said lower floor section, said side wall, said upper floor section and said mounting flange are made as one piece.

15. A floor module as set forth in claim 14 further comprising adhesive applied to said mounting flange to secure said mounting flange and thereby said floor module with the vehicle load support structure.
